# FASCICULE DE BREVET EUROPEEN

(11) **EP 1 422 088 B1**
(45) Date de publication et mention de la délivrance du brevet: **05.04.2006**
(21) Numéro de dépôt: 03356182.0
(22) Date de dépôt: 19.11.2003
(51) Int. Cl.: B60H 1/34

(54) **Dispositif permettant de commander l'écoulement d'un fluide et d'orienter cet écoulement dans une direction déterminée**
Vorrichtung zur Steuerung einer Fluidströmung und zum Ausrichten des Fluids in eine vorbestimmte Richtung
Device for controlling a fluid flow and orientating that fluid in a determined direction

(30) Priorité: 19.11.2002 FR 0214453
(43) Date de publication de la demande: 26.05.2004
(73) Titulaire: BOURBON AUTOMOBILE, 39170 Saint Lupicin (FR)
(72) Inventeur: Bourbon, Claude, 39360 Molinges (FR)
(74) Mandataire: Jeannet, Olivier

(56) Documents cités:
- DE-U- 1 942 687
- FR-A- 2 806 968

## Description

La présente invention concerne un dispositif permettant de commander l'écoulement d'un fluide et d'orienter cet écoulement dans une direction déterminée. Ce dispositif peut en particulier être un aérateur pour habitacle de véhicule automobile. Un tel dispositif est divulgué par FR2806968.

Il est connu d'utiliser un aérateur pour habitacle de véhicule automobile qui comprend:
- un corps délimitant un conduit d'écoulement du fluide
- une buse de diffusion de fluide, et
- des moyens de montage respectifs aménagés sur le corps et sur la buse, permettant le montage pivotant de cette buse dans ce corps, entre une position de fermeture du dispositif, dans laquelle la buse obture ledit conduit, et une pluralité de positions d'ouverture du dispositif, dans lesquelles la buse laisse passer le fluide entre elle et le conduit, la buse pouvant être placée dans chacune de ces positions d'ouverture pour permettre le réglage de la direction d'écoulement du fluide, lesdits moyens de montage comprenant un anneau monté dans le corps de manière pivotante autour d'un axe sensiblement parallèle à l'axe du conduit, et des moyens de montage aménagés sur cet anneau, propres à coopérer avec les moyens de montage que comprend la buse pour permettre le montage de cette buse sur cet anneau avec possibilité de pivotement autour d'un axe perpendiculaire à l'axe dudit conduit.

Dans ce dispositif connu, la buse est ainsi mobile en pivotement autour de deux axes, dont un premier est perpendiculaire à l'axe du conduit (pivotement de la buse par rapport à l'anneau) et dont un deuxième est parallèle à l'axe du conduit (pivotement de l'ensemble buse - anneau par rapport au corps).

Le premier de ces mouvements de pivotement permet l'ouverture ou la fermeture du conduit et le réglage de l'orientation du fluide dans un plan, par exemple le plan horizontal dans l'habitacle d'un véhicule automobile, pour une orientation du flux d'air vers la gauche vers la droite ; le deuxième de ces mouvements de pivotement permet de modifier l'orientation dudit premier axe dans le plan de l'anneau, pour modifier l'orientation du plan dans lequel pivote la buse, et donc l'orientation de l'écoulement du fluide, par exemple pour passer de ladite orientation du flux vers la gauche ou vers la droite à une orientation de ce flux dans un plan vertical par rapport à l'habitacle du véhicule, donc vers le haut ou vers le bas.

Cet aérateur permet ainsi de commander l'écoulement d'un fluide et l'orientation de cet écoulement dans une infinité de directions, par combinaison des deux mouvements précités, tout en présentant une structure particulièrement simple, constituée d'un nombre réduit de pièces. En particulier, la buse peut être monobloc.

La buse comprend généralement une enveloppe sphérique, et est constituée par plusieurs parois circulaires étagées et par une paroi située en position médiane ; le bord périphérique de cette paroi située en position médiane est conformé de manière à venir coopérer, dans deux positions de pivotement de la buse distantes de sensiblement 180° l'une par rapport à l'autre, avec la face interne de l'anneau pour réaliser la fermeture de l'admission d'air du dispositif.

Dans les dispositifs connus comme décrits ci-dessus, l'anneau portant la buse est généralement formé par deux matériaux thermoplastiques différents qui sont injectés tour à tour dans le même moule, par la technique bien connue de bi-injection.

Le premier matériau qui permet de réaliser l'âme de l'anneau est choisi pour ses propriétés de résistance mécanique, et son faible coût. Typiquement, on utilise du polypropylène.

Le second matériau qui est utilisé, est choisi pour ses propriétés d'élasticité afin d'améliorer le pivotement de la bague à l'intérieur du corps de conduit d'écoulement du fluide, ainsi que l'étanchéité au niveau de l'interface anneau / corps de conduit d'écoulement. Ce matériau est par exemple un élastomère de type Santoprène®.

D'autre part, dans les dispositifs connus, lorsque l'utilisateur désire positionner la buse perpendiculairement à l'axe longitudinal du conduit afin de fermer l'admission d'air, il doit forcer la buse dans cette position en faisant passer un point dur à la paroi de la buse située en position médiane.

Au passage de ce point dur, l'anneau est déformé en élongation. Or, un dispositif permettant l'écoulement d'un fluide, notamment lorsqu'il s'agit d'un aérateur de véhicule automobile, est parfois soumis à de fortes variations de température, pendant un temps plus ou moins prolongé. Il est apparu que ces variations de température induisent un durcissement de certains matériaux, et dans le cas présent, un durcissement du polypropylène lorsque la température diminue. Alors, l'élongation de l'anneau pour passage du point dur afin de pivoter la buse en position de fermeture de l'admission d'air, devient particulièrement difficile.

Au contraire, lorsque la température augmente, l'effort de passage du point dur en position de fermeture de l'admission d'air est trop facile, et il peut arriver que le blocage en position de fermeture de l'admission d'air soit insuffisant, voire inopérant.

Une telle instabilité fonctionnelle de l'anneau lors de variations de température conduit à générer des fuites de fluide - par exemple d'air dans le cas d'un aérateur de véhicule - qui nuisent au bon fonctionnement du dispositif, en particulier lorsque l'utilisateur recherche précisément une bonne étanchéité de la buse et du corps.

Dans ces conditions, pour obtenir un aérateur qui donne satisfaction, il convient que les pièces soient fabriquées avec des tolérances de fabrication très strictes, ce qui conduit à écarter un certain nombre de pièces en sortie de fabrication et augmente donc le coût global de la production.

L'objectif de la présente invention est de résoudre ce problème en proposant un dispositif permettant de commander l'écoulement d'un fluide, par exemple de l'air, en conservant intactes toutes ses propriétés fonctionnelles, même lorsque ledit dispositif est soumis à de fortes variations thermiques, et ne nécessitent pas des tolérances de fabrication très strictes.

L'objectif cité plus haut est atteint avec un dispositif permettant de commander l'écoulement d'un fluide et d'orienter cet écoulement dans une direction déterminée, comprenant :
- un corps délimitant un conduit d'écoulement du fluide ;
- une buse de diffusion de fluide, et
- des moyens de montage respectifs aménagés sur le corps et sur la buse, permettant le montage pivotant de cette buse dans ce corps, entre une position de fermeture du dispositif, dans laquelle la buse obture ledit conduit, et une pluralité de positions d'ouverture du dispositif, dans lesquelles la buse laisse passer le fluide entre elle et le conduit, la buse pouvant être placée dans chacune de ces positions d'ouverture pour permettre le réglage de la direction d'écoulement du fluide ;
lesdits moyens de montage comprenant un anneau monté dans le corps de manière pivotante autour d'un axe sensiblement confondu avec l'axe du conduit, et des moyens de montage aménagés sur cet anneau, propres à coopérer avec les moyens de montage que comprend la buse pour permettre le montage de cette buse sur cet anneau avec possibilité de pivotement autour d'un axe perpendiculaire à l'axe dudit conduit;
la buse présentant une enveloppe généralement sphérique, et étant constituée par plusieurs parois circulaires étagées et par une paroi située en position médiane ; le bord périphérique de cette paroi située en position médiane étant conformé de manière à venir coopérer, dans deux positions de pivotement de la buse distantes de sensiblement 180° l'une par rapport à l'autre, avec la face interne de l'anneau pour réaliser la fermeture du dispositif.

Plus précisément, l'invention est caractérisée en ce que l'anneau comporte, sur sa surface interne, dans la zone de contact avec la paroi médiane de la buse, au moins une première lèvre souple et flexible destinée à entrer en contact avec ladite paroi médiane lorsque la buse est basculée en position de fermeture du conduit, et en ce que l'anneau comporte au moins une seconde lèvre souple et flexible, sur sa périphérie externe, en contact avec le conduit d'écoulement, ladite seconde lèvre étant de préférence moulée dans le même matériau que la première lèvre.

Avantageusement, les deux lèvres appartiennent à une même pièce.

Chaque lèvre est non seulement souple, mais également flexible, ce qui permet, lors du passage du point dur lorsque l'utilisateur désire fermer l'admission d'air, de réaliser une déformation en flexion de la lèvre, et non plus une déformation en élongation de l'anneau tout entier.

En effet, dans les dispositifs connus, le passage du point dur lors de la fermeture d'admission d'air, s'opérait par un ensemble de déformations de l'anneau, notamment par élongation de l'anneau et compression du santoprene dans l'épaisseur de l'anneau. Dans un tel cas, ces deux déformations entraînent des efforts très variables si les pièces présentent des écarts dimensionnels et si la température varie, par variation des modules d'élasticité des matériaux utilisés, et donc des efforts pour une même course, et par dilatation différentielle des différentes pièces qui entraîne des variations dimensionnelles, qui à leur tour génèrent des variations d'efforts.

Or, la flexion d'une lèvre d'un matériau souple tel que le santoprene nécessite de très faibles efforts. Lors de variations de température, ces efforts de flexion de la lèvre varient en proportion du déplacement comme décrit précédemment pour des corps massifs qui se déforment en compression, mais ils varient de façon moindre au niveau de leur valeur.

Ainsi, malgré de possibles changements de température, l'instabilité fonctionnelle décrite plus haut dans le cas des dispositifs connus, ainsi que les possibles problèmes d'étanchéité, n'apparaissent pas dans le cadre de la présente invention. De plus, l'effort à exercer par l'utilisateur pour réaliser des mouvements relatifs entre d'une part l'anneau et la buse, et d'autre part l'anneau et le conduit d'air, varie très peu, quelle que soit la température de fonctionnement.

En outre, l'ajout d'un méplat à la face interne de la lèvre a permis de retrouver les efforts de passage du point dur. Néanmois, dans le cadre de la présente invention, la mise au point de ce point dur est facilitée par le fait qu'une variation de cote sur une des pièces entraîne une moindre variation d'effort pour le passage du point dur.

De préférence, l'âme de l'anneau est réalisée en un thermoplastique rigide de type polypropylène, et les première et seconde lèvres sont réalisées en un élastomère thermoplastique de type Santoprène®, les deux matériaux étant moulés dans le même moule par un procédé de bi-injection. D'autres matériaux élastomères peuvent néanmoins être utilisés.

Avantageusement, le corps comprend un siège annulaire propre à recevoir l'anneau avec possibilité de pivotement axial autour de l'axe de révolution de l'anneau, et un ensemble d'encliquetage, l'épaisseur de l'anneau étant telle que, lorsque cet anneau est en appui contre le siège, le côté de l'anneau situé à l'opposé de ce siège est verrouillé dans le sens axial par ledit ensemble d'encliquetage.

De préférence chaque ensemble d'encliquetage comprend deux fentes aménagées dans des plans diamétraux axialement décalés et une proéminence à paroi inclinée, faisant saillie radialement vers l'intérieur du corps et située entre les fentes, l'épaisseur de la paroi du corps étant telle que la portion de paroi située entre ces fentes est déformable dans le sens radial, pour permettre le mouvement de la proéminence entre une position radialement interne, dans laquelle cette proéminence peut assurer le verrouillage de l'anneau, et une position d'effacement, dans laquelle cette proéminence autorise le passage de l'anneau au-delà d'elle.

De préférence également la buse et l'anneau comprennent des moyens à encliquetage, permettant d'amener en prise par simple enclenchement lesdits moyens de montage respectifs de cet anneau et de la buse.

Les moyens d'encliquetage de la buse et de l'anneau comprennent de préférence deux cavités cylindriques de l'anneau, diamétralement opposées, dont chacune débouche dans la face interne de l'anneau, au niveau d'un évidement aménagé dans celui-ci, et comprennent en outre deux tourillons de la buse, diamétralement opposés, faisant saillie de la paroi médiane, l'un de ces tourillons étant destiné à être engagé dans l'une des cavités de l'anneau et l'autre tourillon est destiné à être pressé contre l'anneau jusqu'à légèrement déformer celui-ci dans le sens radial, vers l'extérieur, pour permettre d'engager cet autre tourillon dans l'autre cavité de l'anneau.

Avantageusement, chaque évidement délimite deux surfaces d'appui, de part et d'autre de l'ouverture de la cavité de l'anneau débouchant dans cet évidement, et chaque tourillon est bordé, au niveau de sa base, par un ergot s'étendant radialement par rapport à lui, chaque ergot venant coopérer avec l'une desdites surfaces d'appui pour arrêter le mouvement de pivotement de la buse lorsque celle-ci se trouve dans une desdites positions de fermeture du dispositif.

Enfin, les parois circulaires étagées et la paroi située en position médiane sont de préférence reliées les unes aux autres par trois voiles, dont celui situé en position médiane a une forme plane et dont les deux situés en position latérale ont des formes courbes.

Pour sa bonne compréhension, l'invention est à nouveau décrite ci-après, en référence au dessin schématique annexé représentant, à titre d'exemple non limitatif, une forme de réalisation préférée du dispositif qu'elle concerne, ce dispositif étant, dans cet exemple, un aérateur pour habitacle de véhicule automobile.
La figure 1 est une vue en perspective éclatée de cet aérateur ;
la figure 2 en est une vue de profil, à l'état monté, dans une position de fermeture de cet aérateur, bloquant l'écoulement de l'air ;
la figure 3 en est une vue en coupe agrandie, montrant l'anneau serti entre le corps d'aérateur et la buse, dans une position de fermeture empêchant l'écoulement de l'air ;

Les figures représentent sous différents angles un aérateur 1, comprenant un corps 2, un anneau 3 et une buse 4 de diffusion d'air.

L'ensemble de ces pièces 2, 3, 4 est réalisé en matériau synthétique approprié, tel que du polypropylène.

Le corps 2 présente une forme tubulaire évasée et délimite un conduit 7 d'écoulement de l'air. Ce corps 2 est destiné à être fixé à une paroi (non représentée), notamment le tableau de bord du véhicule, par l'une de ses extrémités, au moyen de pattes 8, et son autre extrémité est destinée à être raccordée à un conduit (non représenté) d'acheminement de l'air.

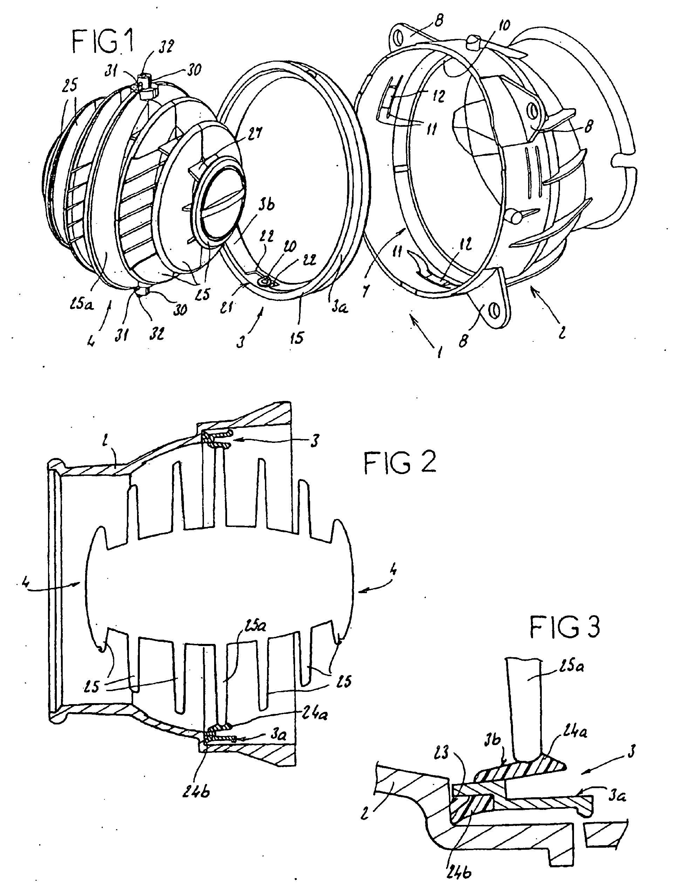

Ainsi que le montre plus particulièrement la figure 1, ce corps 2 présente un siège annulaire 10, propre à recevoir l'anneau 3 avec possibilité de pivotement, et trois ensembles d'encliquetage répartis sur sa circonférence. Chacun de ces ensembles comprend deux fentes 11 aménagées dans des plans diamétraux axialement décalés et une proéminence 12 à paroi inclinée, faisant saillie radialement sur l'intérieur du corps 2 et située entre les fentes 11.

L'épaisseur de la paroi du corps 2 est telle que les portions de paroi situées entre les fentes 11 sont déformables dans le sens radial, pour permettre le mouvement des proéminences 12, entre leur position d'équilibre dans laquelle elles font saillie vers l'intérieur du conduit 7, et une position d'effacement dans laquelle ces proéminences 12 autorisent le passage de l'anneau 3 au-delà d'elles.

L'anneau 3 présente un diamètre extérieur tel qu'il peut être engagé dans le corps 2 jusqu'à ce que sa face axiale d'extrémité tournée vers le siège 10 vienne prendre appui contre ce siège 10. Au niveau de son extrémité axiale opposée, l'anneau 3 comprend un rebord 15 faisant saillie vers l'extérieur, propre, lors de l'engagement de l'anneau 3 dans le corps 2, à prendre appui contre les proéminences 12 puis à effacer celles-ci en les déplaçant dans le sens radial. L'épaisseur de l'anneau 3 est telle que, lorsque cet anneau 3 est en appui contre le siège 10, la face axiale d'extrémité située à l'opposé se trouve au-delà desdites proéminences 12. Ces dernières peuvent donc, dans cette position de l'anneau 3, revenir dans leur position normale, et verrouiller l'anneau 3 entre elles et ledit siège 10 tout en autorisant le pivotement de l'anneau 3 par rapport au corps 2.

L'anneau 3 comprend également deux cavités cylindriques 20 diamétralement opposées. Chacune de ces cavités 20 débouche dans la face interne de l'anneau, au niveau d'un évidement 21 aménagé dans celui-ci. Cet évidement 21 délimite deux surfaces d'appui 22, de part et d'autre de l'ouverture de la cavité 20.

Ainsi que cela apparaît aux figures 2 et 3, l'anneau 3 a une structure bi-matière, et comprend une base 3a en une matière relativement rigide, par exemple en un propylène, et un surmoulage 3b en un matériau souple, par exemple un polymère de type Santoprène®, destiné à venir au contact de la buse 4.

Ces mêmes figures montrent en outre que l'anneau 3 forme un siège 23 de réception d'une paroi médiane 25a que comprend la buse 4. En outre, l'anneau 3 comporte à sa surface interne, dans la zone de contact avec la paroi médiane 25a de la buse 4, une première lèvre souple et flexible 24a destinée à entrer en contact avec ladite paroi médiane lorsque la buse est basculée en position de fermeture du conduit 7. Ladite première lèvre 24a est réalisée en un matériau à hautes propriétés de tenue en température, du type Santoprène ®.

L'anneau comporte une seconde lèvre souple et flexible 24b, sur sa périphérie externe, en contact avec le corps de conduit d'écoulement, ladite seconde lèvre étant moulée dans le même matériau à hautes propriétés de tenue en température que la première lèvre 24a.

L'âme de l'anneau est réalisée en un thermoplastique rigide de type polypropylène, et les première et seconde lèvres sont réalisées en un élastomère thermoplastique de type Santoprène®, les deux matériaux étant moulés dans le même moule par un procédé de bi-injection.

La buse 4 présente une enveloppe généralement sphérique, et est constituée par six parois circulaires étagées 25, et par ladite paroi 25a située en position médiane.

Ces parois 25 et 25a sont reliées les unes aux autres par trois voiles 26, 27, dont celui situé en position médiane a une forme plane et dont les deux situés en position latérale ont des formes courbes.

La buse 4 comprend en outre deux tourillons 30 diamétralement opposés, représentés à la figure 1, faisant saillie de la paroi 25a. Chaque tourillon 30 est bordé, au niveau de sa base, par un ergot 31 s'étendant radialement par rapport à lui et comporte un ergot 32 faisant saillie de sa face axiale d'extrémité.

Ainsi que cela se comprend en référence aux figures, l'un des tourillons 30 est destiné à être engagé dans l'une des cavités 20 puis l'autre tourillon 30 est pressé contre l'anneau 3 jusqu'à légèrement déformer celui-ci dans le sens radial, vers l'extérieur, pour permettre d'engager cet autre tourillon 30 dans l'autre cavité 20. Cet engagement autorise le retour de l'anneau 3 à sa forme neutre, ce qui permet le verrouillage du tourillon 30 dans la cavité 20. L'ergot 32 fait saillie au-delà de la face extérieure de l'anneau 3 afin d'assurer ce verrouillage.

Ces tourillons 30 et cavités 20 permettent le basculement de la buse 4 par rapport à l'anneau 3, entre deux positions de fermeture de l'aérateur 1 distantes d'une course sur sensiblement 180°, dans lesquelles le bord périphérique de la paroi 25a est au contact ou est proche de la face interne de l'anneau 3. La buse 4 peut être placée dans une pluralité de positions intermédiaires entre ces positions de fermeture, dans lesquelles ledit bord périphérique est distant de ladite face interne, ce qui permet le passage du flux d'air entre ce bord et cette face et correspond à l'ouverture de l'aérateur 1. Cette pluralité de positions d'ouverture permet de régler l'orientation du flux d'air dans un plan perpendiculaire à l'axe passant par les tourillons 30.

Chaque ergot 31 vient coopérer, dans l'une ou l'autre desdites positions de fermeture, avec l'une des surfaces d'appui 22 pour arrêter le mouvement de pivotement de la buse 4 lorsque celle-ci est dans une de ces position de fermeture.

En pratique, pour le montage de l'aérateur 1, la buse 4 est montée sur l'anneau 3, par engagement puis encliquetage, de la manière précitée, des tourillons 30 dans les cavités 20. L'ensemble est ensuite engagé dans le corps 2 jusqu'à ce que l'anneau 3 porte contre les proéminences 12 puis efface radialement ces dernières, et jusqu'à ce que cet l'anneau 3 vienne au contact du siège 10. Les proéminences 12 permettent l'encliquetage de l'anneau 3 dans le corps 2, avec possibilité de pivotement de celui-ci autour de l'axe du conduit 7.

La buse 4 est ainsi mobile en pivotement autour de deux axes, dont un premier est perpendiculaire à l'axe du conduit 7 (pivotement de la buse 4 par rapport à l'anneau 3) et dont un deuxième est confondu avec l'axe du conduit 7 (pivotement de l'ensemble buse 4 - anneau 3 par rapport au corps 2). Par axe du conduit, l'on entend l'axe du conduit au niveau de sa section qui reçoit l'anneau.

Le premier de ces mouvements permet l'ouverture ou la fermeture du conduit et le réglage de l'orientation du flux d'air dans le plan perpendiculaire à l'axe passant par les tourillons 30. Il peut par exemple s'agir d'un plan horizontal dans l'habitacle d'un véhicule automobile, pour une orientation du flux d'air vers la gauche ou vers la droite.

Le deuxième de ces mouvements permet de modifier l'orientation dudit axe dans le plan de l'anneau 3, pour modifier l'orientation par rapport au corps 2 du plan dans lequel pivote la buse 4, et donc l'orientation de l'écoulement de l'air. Cette modification peut par exemple consister à passer de ladite orientation du flux vers la gauche ou vers la droite à une orientation de ce flux dans un plan vertical par rapport à l'habitacle du véhicule, donc vers le haut ou vers le bas. Toute orientation de la buse 4 combinant ces deux mouvement est toutefois possible.

Ainsi qu'il apparaît de ce qui précède, l'invention fournit un dispositif permettant de commander l'écoulement d'un fluide et d'orienter cet écoulement, ayant notamment pour avantage, outre ces fonctions, de présenter une structure particulièrement simple, constituée au minimum de trois pièces, à la différence des aérateurs existants, qui comprennent chacun six pièces ou plus.

En outre, la structure des lèvres souples et flexibles de forme circulaire, permet à ces dernières de se conformer facilement à la périphérie de la paroi, ce qui améliore d'autant l'étanchéité.

## Revendications

1. Dispositif (1) permettant de commander l'écoulement d'un fluide et d'orienter cet écoulement dans une direction déterminée, comprenant :
- un corps (2) délimitant un conduit (7) d'écoulement du fluide ;
- une buse (4) de diffusion de fluide, et
- des moyens de montage respectifs (3, 12, 20, 30) aménagés sur le corps (2) et sur la buse (4), permettant le montage pivotant de cette buse (4) dans ce corps (2), entre une position de fermeture du dispositif (1), dans laquelle la buse (4) obture ledit conduit (7), et une pluralité de positions d'ouverture du dispositif (1), dans lesquelles la buse (4) laisse passer le fluide entre elle et le conduit (7), la buse (4) pouvant être placée dans chacune de ces positions d'ouverture pour permettre le réglage de la direction d'écoulement du fluide ;
lesdits moyens de montage comprenant un anneau (3) monté dans le corps (2) de manière pivotante autour d'un axe sensiblement confondu avec l'axe du conduit (7), et des moyens de montage (20) aménagés sur cet anneau (3), propres à coopérer avec les moyens de montage (30) que comprend la buse (4) pour permettre le montage de cette buse (4) sur cet anneau (3) avec possibilité de pivotement autour d'un axe perpendiculaire à l'axe dudit conduit (7) ;
la buse (4) présentant une enveloppe généralement sphérique, et étant constituée par plusieurs parois circulaires étagées (25) et par une paroi (25a) située en position médiane ; le bord périphérique de cette paroi (25a) située en position médiane étant conformé de manière à venir coopérer, dans deux positions de pivotement de la buse (4) distantes de sensiblement 180° l'une par rapport à l'autre, avec la face interne de l'anneau (3) pour réaliser la fermeture du dispositif (1),
dispositif **caractérisé en ce que** l'anneau (3) comporte, sur sa surface interne, dans la zone de contact avec la paroi médiane (25a) de la buse (4), au moins une première lèvre souple et flexible (24a) destinée à entrer en contact avec ladite paroi médiane lorsque la buse est basculée en position de fermeture du conduit (7), et **en ce que** l'anneau comporte au moins une seconde lèvre souple et flexible (24b), sur sa périphérie externe, en contact avec le conduit d'écoulement.

2. Dispositif selon la revendication 1, **caractérisé en ce que** ladite seconde lèvre (24b) est moulée dans le même matériau que la première lèvre (24a).

3. Dispositif selon les revendications 1 ou 2, **caractérisé en ce que** les deux lèvres (24a, 24b) appartiennent à la même pièce.

4. Dispositif selon l'une des revendications 1 à 3, **caractérisé en ce que** l'âme de l'anneau est réalisée en un thermoplastique rigide de type polypropylène, et **en ce que** les première (24a) et seconde (24b) lèvres sont réalisées en un élastomère thermoplastique de type Santoprène®, les deux matériaux étant moulés dans le même moule par un procédé de bi-injection.

5. Dispositif selon l'une des revendications 1 à 4, **caractérisé en ce que** le corps (2) comprend un siège annulaire (10) propre à recevoir l'anneau (3) avec possibilité de pivotement axial autour de l'axe de révolution de l'anneau, et un ensemble d'encliquetage (11, 12), l'épaisseur de l'anneau (3) étant telle que, lorsque cet anneau (3) est en appui contre le siège, la côté de l'anneau (3) situé à l'opposé de ce siège est verrouillé dans le sens axial par ledit ensemble d'encliquetage (12).

6. Dispositif selon la revendication 5, **caractérisé en ce que** chaque ensemble d'encliquetage (11, 12) comprend deux fentes (11) aménagées dans des plans diamétraux axialement décalés et une proéminence (12) à paroi inclinée, faisant saillie radialement vers l'intérieur du corps (2) et située entre les fentes (11), l'épaisseur de la paroi du corps (2) étant telle que la portion de paroi située entre ces fentes (11) est déformable dans le sens radial, pour permettre le mouvement de la proéminence (12) entre une position radialement interne, dans laquelle cette proéminence (12) peut assurer le verrouillage de l'anneau (3), et une position d'effacement, dans laquelle cette proéminence (12) autorise le passage de l'anneau (3) au-delà d'elle.

7. Dispositif selon les revendications 1 à 6, **caractérisé en ce que** la buse (4) et l'anneau (3) comprennent des moyens à encliquetage (20, 21, 30), permettant d'amener en prise par simple enclenchement lesdits moyens de montage respectifs (20, 30) de cet anneau (3) et de la buse (4).

8. Dispositif selon la revendication 7, **caractérisé en ce que** les moyens d'encliquetage de la buse et de l'anneau comprennent deux cavités cylindriques (20) de l'anneau, diamétralement opposées, dont chacune débouche dans la face interne de l'anneau (3), au niveau d'un évidement (21) aménagé dans celui-ci, et comprennent en outre deux tourillons (30) de la buse (4), diamétralement opposés, faisant saillie de la paroi médiane (25a), l'un de ces tourillons (30) étant destiné à être engagé dans l'une des cavités (20) de l'anneau (3) et l'autre tourillon (30) est destiné à être pressé contre l'anneau (3) jusqu'à légèrement déformer celui-ci dans le sens radial, vers l'extérieur, pour permettre d'engager cet autre tourillon (30) dans l'autre cavité (20) de l'anneau (3).

9. Dispositif selon la revendication 8, **caractérisé en ce que** chaque évidement (21) délimite deux surfaces d'appui (22), de part et d'autre de l'ouverture de la cavité (20) de l'anneau (3) débouchant dans cet évidement (21), et **en ce que** chaque tourillon (30) est bordé, au niveau de sa base, par un ergot (31) s'étendant radialement par rapport à lui, chaque ergot (31) venant coopérer avec l'une desdites surfaces d'appui (22) pour arrêter le mouvement de pivotement de la buse (4) lorsque celle-ci se trouve dans une desdites positions de fermeture du dispositif.

10. Dispositif selon l'une des revendications 1 à 9, **caractérisé en ce que** lesdites parois circulaires étagées (25) et ladite paroi située en position médiane (25a) sont reliées les unes aux autres par trois voiles (26, 27), dont celui situé en position médiane a une forme plane et dont les deux situés en position latérale ont des formes courbes.

## Patentansprüche

1. Einheit (1) zur Steuerung der Strömung eines Fluids und zur Orientierung dieser Strömung in eine bestimmte Richtung, wobei diese Einheit Folgendes umfasst:
- einen Körper (2), der eine Leitung (7) für die Strömung des Fluids abgrenzt ;
- eine Düse (4) für die Diffusion des Fluids, und
- jeweilige Montagemittel (3, 12, 20, 30), die auf dem Körper (2) und auf der Düse (4) angeordnet sind, die die drehbar gelagerte Montage dieser Düse (4) in diesem Körper (2) ermöglichen, zwischen einer geschlossenen Position der Einheit (1), in der die Düse (4) die genannte Leitung (7) verschließt, und mehreren geöffneten Positionen der Einheit (1), in denen die Düse (4) das Fluid zwischen sich selbst und der Leitung (7) laufen lässt, wobei die Düse (4) in jede dieser geöffneten Positionen platziert werden kann, um die Einstellung der Richtung für die Strömung des Fluids zu erlauben ;
wobei die genannten Montagemittel einen Ring (3) umfassen, der im Körper (2) montiert ist, und dies auf drehbare Weise um eine Achse, die sich fast mit der Achse der Leitung (7) vereint, und Montagemittel (20), die auf diesem Ring (3) angeordnet sind, und die dazu geeignet sind, zusammen mit den Montagemitteln (30) zu wirken, die die Düse (4) umfasst, um die Montage von dieser Düse (4) auf diesem Ring (3) zu erlauben, mit der Möglichkeit, um eine Achse zu drehen, die senkrecht zur Achse der genannten Leitung (7) ist;
wobei die Düse (4) eine Umhüllung aufweist, die generell sphärisch ist, und die sich aus mehreren stufenförmigen kreisförmigen Wänden (25) und aus einer Wand (25a), die sich in mittlerer Lage befindet, zusammensetzt; wobei der periphere Rand dieser Wand (25a), die sich in mittlerer Lage befindet, derart angepasst ist, dass er in zwei Drehpositionen der Düse (4), die eine zur anderen um fast 180° distanziert sind, zusammen mit der inneren Fläche des Rings (3) wirkt, um die Schließung der Einheit (1) zu realisieren,
wobei die Einheit **dadurch gekennzeichnet ist, dass** der Ring (3) auf seiner inneren Fläche in der Kontaktzone mit der mittleren Wand (25a) von der Düse (4) zumindest eine erste biegsame und elastische Lippe (24a) umfasst, die dazu vorgesehen ist, in Kontakt mit der genannten mittleren Wand zu kommen, wenn die Düse in die geschlossene Position der Leitung (7) gekippt ist, und **dadurch gekennzeichnet, dass** der Ring zumindest eine zweite biegsame und elastische Lippe (24b) auf seiner externen Peripherie in Kontakt mit der Leitung für die Strömung umfasst.

2. Einheit nach Anspruch 1, **dadurch gekennzeichnet, dass** die genannte zweite Lippe (24b) aus demselben Material wie die erste Lippe (24a) geformt ist.

3. Einheit nach Anspruch 1 oder 2, **dadurch gekennzeichnet, dass** die beiden Lippen (24a, 24b) zu demselben Teil gehören.

4. Einheit nach einem der Ansprüche 1 bis 3, **dadurch gekennzeichnet, dass** der Kern des Rings aus einem steifen thermoplastischem Kunststoff des Typs Polypropylen realisiert ist, und **dadurch gekennzeichnet, dass** die erste (24a) und die zweite (24b) Lippe aus einem thermoplastischen Elastomer des Typs Santopren™ realisiert sind, wobei die beiden Materialien in derselben Form mit Hilfe eines Verfahrens der 2-Schicht-Einspritzung geformt sind.

5. Einheit nach einem der Ansprüche 1 bis 4, **dadurch gekennzeichnet, dass** der Körper (2) einen ringförmigen Sitz (10) umfasst, der dazu geeignet ist, den Ring (3) aufzunehmen, mit der Möglichkeit der axialen Drehung um die Rotationsachse des Rings, und eine Einklinkeinheit (11, 12), wobei die Dicke des Rings (3) derart ist, dass, wenn sich dieser Ring (3) gegen diesen Sitz stützt, die Seite des Rings (3), die sich gegenüber diesem Sitz befindet, durch die genannte Einklinkeinheit (12) in der axialen Richtung verriegelt ist.

6. Einheit nach Anspruch 5, **dadurch gekennzeichnet, dass** jede Einklinkeinheit (11, 12) zwei Schlitze (11) umfasst, die in diametralen Ebenen, die axial verschoben sind, angeordnet sind, und einen Vorsprung (12) mit Schrägwand, der radial zum Inneren des Körpers hin (2) einen Vorsprung bildet und sich zwischen den Schlitzen (11) befindet, wobei die Dicke der Wand des Körpers (2) derart ist, dass der Abschnitt der Wand, der sich zwischen diesen Schlitzen (11) befindet, in der radialen Richtung verformbar ist, um die Bewegung des Vorsprungs (12) zwischen einer radial internen Position zu erlauben, in der dieser Vorsprung (12) die Verriegelung des Rings (3) gewährleisten kann, und einer Löschposition, in der dieser Vorsprung (12) den Durchgang des Rings (3) über ihn hinaus erlaubt.

7. Einheit nach Anspruch 1 bis 6, **dadurch gekennzeichnet, dass** die Düse (4) und der Ring (3) Einklinkmittel (20, 21, 30) umfassen, die es durch einfaches Einklinken der genannten jeweiligen Montagemittel (20, 30) erlauben, diesen Ring (3) und die Düse (4) in Eingriff zu bringen.

8. Einheit nach Anspruch 7, **dadurch gekennzeichnet, dass** die Montagemittel der Düse und des Rings zwei zylindrische Hohlräume (20) des Rings umfassen, die diametral entgegengesetzt sind, von denen jeder in die innere Fläche des Rings (3) mündet, und dies auf der Ebene einer Aussparung (21), die in diesem angeordnet ist, und dass sie darüber hinaus zwei Drehzapfen (30) der Düse (4) umfassen, die diametral entgegengesetzt sind, und die einen Vorsprung der mittleren Wand (25a) bilden, wobei einer dieser Drehzapfen (30) dazu vorgesehen ist, in einen der Hohlräume (20) des Rings (3) gesteckt zu werden und wobei der andere Drehzapfen (30) dazu vorgesehen ist, gegen den Ring (3) gedrückt zu werden, bis dieser leicht in der radialen Richtung nach Außen verformt wird, um es zu erlauben, diesen anderen Drehzapfen (30) in den anderen Hohlraum (20) des Rings (3) zu stecken.

9. Einheit nach Anspruch 8, **dadurch gekennzeichnet, dass** jede Aussparung (21) zwei Stützflächen (22) abgrenzt, die sich auf beiden Seiten der Öffnung des Hohlraums (20) des Rings (3) befinden, der in dieser Aussparung (21) mündet, und **dadurch gekennzeichnet, dass** jeder Drehzapfen (30) auf der Ebene seiner Basis von einem Stift (31) eingefasst ist, der sich radial zu ihm erstreckt, wobei jeder Stift (31) mit einer der genannten Stützflächen (22) zusammen wirkt, um die Drehbewegung der Düse (4) anzuhalten, wenn sich diese in einer der genannten geschlossenen Positionen der Einheit befindet.

10. Einheit nach einem der Ansprüche 1 bis 9, **dadurch gekennzeichnet, dass** die genannten stufenförmigen kreisförmigen Wände (25) und die genannte Wand, die sich in der mittleren Position befindet (25a) durch drei Schirme (26, 27) miteinander verbunden sind, wobei derjenige, der sich in der mittleren Position befindet, eine flache Form aufweist und wobei die beiden, die sich in seitlicher Position befinden, gebogene Formen aufweisen.

## Claims

1. Device (1) for controlling a fluid flow and for directing this flow in a determined direction, comprising :
- a body (2) delimiting a fluid flow duct (7);
- a fluid distribution nozzle (4), and
- corresponding assembly means (3, 12, 20, 30) arranged on the body (2) and on the nozzle (4) enabling the pivoting assembly of this nozzle (4) in this body (2) between a closed position of the device (1), in which the nozzle (4) closes off the said duct (7), and a plurality of open positions of the device (1) in which the nozzle (4) allows fluid to pass between the nozzle and the duct (7), the nozzle (4) possibly being placed in each of these open positions to enable adjustment of the fluid flow direction ;
the said assembly means comprising a ring (3) installed in the body (2) free to pivot about an axis approximately coincident with the axis of the duct (7), and assembly means (20) arranged on this ring (3) capable of cooperating with the assembly means (30) provided on the nozzle (4) to enable assembly of this nozzle (4) on his ring (3) with the possibility of pivoting about an axis perpendicular to the axis of the said duct (7) ;
the nozzle (4) having a generally spherical casing and being composed of several staged circular walls (25) and a wall (25a) placed in the median position ; the peripheral edge of this wall (25a) placed in the median position being shaped so as to cooperate with the inner face of the ring (3) to close the device (1), at two pivoting positions of the nozzle (4) separated from each other by about 180°,
device **characterised in that** the ring (3) comprises at least one first supple and flexible lip (24a) on its inner surface in the area at which contact is made with the median wall (25a) of the nozzle (4), designed to come into contact with the said median wall when the nozzle is tilted into the closed position of the duct (7), and **in that** the ring comprises at least one second supple and flexible lip (24b) on its outer periphery, in contact with the flow duct.

2. Device according to claim 1, **characterised in that** the said second lip (24b) is moulded from the same material as the first lip (24a).

3. Device according to claim 1 or 2, **characterised in that** the two lips (24a, 24b) belong to the same part.

4. Device according to one of claims 1 to 3, **characterised in that** the core of the ring is made from a rigid thermoplastic of the polypropylene type, and **in that** the first (24a) lip and the second (24b) lip are made from a thermoplastic elastomer of the Santoprene® type, the two materials being moulded in the same mould by a dual injection process.

5. Device according to one of claims 1 to 4, **characterised in that** the body (2) comprises an annular seat (10) on which the ring (3) fits with the possibility of axial pivoting about the axis of revolution of the ring, and a click fitting assembly (11, 12), the thickness of the ring (3) being such that when this ring (3) bears on the seat, the side of the ring (3) furthest from this seat is locked in the axial direction by the said click fitting assembly (12).

6. Device according to claim 5, **characterised in that** each click fitting assembly (11, 12) comprises two slits (11) formed in axially offset diametric planes and a protuberance (12) with an inclined wall, radially projecting inwards into the body (2) and located between the slits (11), the thickness of the wall of the body (2) being such that the wall portion located between these slits (11) is deformable in the radial direction to enable movement of the protuberance (12) between a radially inner position in which this protuberance (12) can lock the ring (3) and a retracted position in which this protuberance (12) allows passage of the ring (3) beyond it.

7. Device according to claims 1 to 6, **characterised in that** the nozzle (4) and the ring (3) comprise click fitting means (20, 21, 30) connecting the said assembly means (20, 30) of this ring (3) and the nozzle (4) by simple interlocking.

8. Device according to claim 7, **characterised in that** the click fitting means of the nozzle and the ring comprise two diametrically opposite cylindrical cavities (20) in the ring, each of which opens up in the inner face of the ring (3) at a recess (21) formed in the ring, and also comprise two diametrically opposite trunnions (30) in the nozzle (4) projecting from the median wall (25a), one of these trunnions (30) being designed to be engaged in one of the cavities (20) in the ring (3) and the other trunnion (30) being designed to be pressed in contact with the ring (3) until the ring is slightly deformed in the radial direction, outwards to engage this other trunnion (30) in the other cavity (20) in the ring (3).

9. Device according to claim 8, **characterised in that** each recess (21) delimits two contact surfaces (22) on each side of the cavity opening (20) in the ring (3) opening up in this recess (21) and **in that** there is a pin (31) at the boundary of each trunnion (30) extending radially from the trunnion, each pin (31) cooperating with one of the said bearing surfaces (22) to stop the pivoting movement of the nozzle (4) when this nozzle is in one of the said closed positions of the device.

10. Device according to one of claims 1 to 9, **characterised in that** the said staged circular walls (25) and the said wall placed in the median position (25a) are connected to each other by three webs (26, 27), the web placed in median position having a plane shape and the two webs placed in the lateral position having a curved shape.
